# EUROPEAN PATENT APPLICATION

(11) **EP 3 572 455 A1**
(43) Date of publication of application: **27.11.2019**
(21) Application number: 18174458.2
(22) Date of filing: 26.05.2018
(51) Int. Cl.: C08K 7/06

(54) **DISPERSIONS FOR IMPREGNATING ARRANGEMENTS OF FIBERS WITH THERMOPLASTIC MATERIALS AND SYSTEMS FOR AND METHODS OF USING THE SAME**

(71) Applicant: SABIC Global Technologies B.V., 4612 PX Bergen op Zoom (NL)
(72) Inventor: INAMDAR, Kapil, 4612 PX Bergen op Zoom (NL); LUGO, Jeffrey, 4612 PX Bergen op Zoom (NL)
(74) Representative: J A Kemp LLP

(57) **Abstract**

This disclosure includes dispersions for impregnating arrangements of fibers with thermoplastic materials and systems for and methods of using the same. Some dispersions include an aqueous solution and particles, each including a thermoplastic material, such as polycarbonate, dispersed within the solution, wherein ones of the particles having a diameter that is less than or equal to 50 micrometers (µm) account for at least 50% of the mass and/or the volume of the particles, and: (1) ones of the particles having a diameter that is greater than or equal to 55 µm account for at least 5% of the mass and/or the volume of the particles; and/or (2) each of the particles includes one or more additives, such as a flame retardant, dispersed throughout the thermoplastic material.

## Description

### BACKGROUND

### 1. Field of Invention

The present invention relates generally to aqueous impregnation of fiber arrangements with thermoplastic materials and, more specifically, to dispersions for accomplishing the same. The dispersions can each include thermoplastic material-containing particles dispersed within an aqueous solution, where the particles, via their sizes, composition, and/or structure: (1) promote dispersion stability, facilitating, in some instances, the inclusion of one or more additives in the dispersion; (2) enhance impregnation of fiber arrangements using the dispersion, thereby facilitating subsequent production of laminates using those fiber arrangements, and/or the like.

### 2. Description of Related Art

A typical aqueous impregnation process involves wetting an arrangement of fibers with a dispersion that includes thermoplastic particles dispersed in an aqueous solution, thereby introducing the particles into the arrangement, drying the arrangement to remove the solution therefrom, and heating the arrangement to melt the particles. In general, the more uniformly that the particles are distributed within the arrangement, the more effective impregnation of the arrangement will be.

If the particles are too large, they may be unable to sufficiently reach interstices between the fibers of the arrangement. This can lead to an uneven distribution of thermoplastic material within the impregnated arrangement (the arrangement after melting the particles) that not only adversely impacts mechanical properties-such as the strength and the stiffness-of the arrangement, but may cause the arrangement to include air pockets, to have an aesthetically displeasing surface finish, to curl or twist, to have exposed fibers that are susceptible to damage during further processing of the arrangement, and/or the like.

### SUMMARY

While using smaller thermoplastic particles in the dispersion can lead to more effective impregnation of the arrangement, using particles that are too small can hinder dispersion stability, requiring the use of an increased amount of surfactant, dispersant, and/or the like in the dispersion, negatively impacting impregnation of the arrangement, and/or the like. This is, in part, due to a mass of smaller particles having a larger surface area-and thus being more likely to react with one another and/or other ingredients, components, and/or compounds in the dispersion-than the same mass of larger particles.

Some of the present dispersions include thermoplastic material-containing particles dispersed within an aqueous solution, wherein the particles have a particle size distribution that permits the particles to sufficiently reach interstices between fibers of an arrangement of fibers when the arrangement is wet with the dispersion-thereby providing for effective impregnation of the arrangement-without undesirably hindering dispersion stability (e.g., reducing the need for surfactant, dispersant, and/or the like to be included in the dispersion). For example, in some such dispersions: (1) ones of the particles having a diameter that is less than or equal to 50 micrometers (µm) account for at least 50% of the mass and/or the volume of the particles; and (2) ones of the particles having a diameter that is greater than or equal to 55 µm account for at least 5% of the mass and/or the volume of the particles. In some such dispersions, ones of the particles having a diameter that is less than or equal to 30 µm can account for at least 10% of the mass and/or the volume of the particles. This is not to say that the present dispersions do not include surfactant, dispersant, and/or the like; for example, some of the present dispersions include a surfactant (e.g., a cationic, anionic, or nonionic surfactant). Instead, it is to say that some of the present dispersions, via the particle size distributions of their particles, can reduce the need for surfactant, dispersant, and/or the like (e.g., can have a lower critical micelle concentration).

In some instances, it is desirable to include one or more additives in the dispersion to, for example, enhance impregnation of the arrangement and/or properties of the impregnated arrangement. Such additives, however, may undesirably react with one another and/or other ingredients, components, and/or compounds in the dispersion, aggregate, not be uniformly introduced into an arrangement when the arrangement is wet with the dispersion, render the dispersion more complicated, and/or the like. Some of the present dispersions can allow for the inclusion of such additives while mitigating the above drawbacks via, for example, the additives being dispersed throughout the thermoplastic material-containing particles.

The terms "a" and "an" are defined as one or more unless this disclosure explicitly requires otherwise. In any disclosed embodiment, the term "approximately" may be substituted with "within [a percentage] of' what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a device or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), "include" (and any form of include, such as "includes" and "including"), and "contain" (and any form of contain, such as "contains" and "containing") are open-ended linking verbs. As a result, a dispersion or system that "comprises," "has," "includes," or "contains" one or more elements possesses those one or more elements, but is not limited to possessing only those one or more elements. Likewise, a method that "comprises," "has," "includes," or "contains" one or more steps possesses those one or more steps, but is not limited to possessing only those one or more steps.

Any embodiment of any of the dispersions, systems, and methods can consist of or consist essentially of - rather than comprise/have/include/contain - any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1** is a flow chart showing some of the present methods for producing laminates, each of the methods including preparing a dispersion having thermoplastic material-containing particles dispersed within an aqueous solution, impregnating an arrangement of fibers with the thermoplastic material, and applying heat and pressure to the impregnated arrangement of fibers to produce a laminate.
**FIGs. 2** and **3** are graphs showing, for two of the present dispersions, respectively, the particle size distributions for the thermoplastic material-containing particles.
**FIG. 4** is a schematic view of a thermoplastic material-containing particle that is representative of the thermoplastic material-containing particles of some of the present dispersions, the particle including one or more additives dispersed throughout the thermoplastic material.
**FIG. 5** is a schematic view of a system that is suitable for impregnating an arrangement of fibers with a thermoplastic material pursuant to some of the present methods.
**FIG. 6** is a schematic view of a press that is suitable for applying heat and pressure to an impregnated arrangement of fibers to produce a laminate pursuant to some of the present methods.
**FIG. 7** is a chart showing longitudinal tensile strengths for each of first and second batches of unidirectional tapes produced using some of the present methods.
**FIGs. 8A** and **8B** are photographs of unidirectional tapes from the first and second batches, respectively, after failing under longitudinal tension.
**FIG. 9** is a graph of pressing element temperature and applied pressure versus time for each of a low-temperature consolidation cycle and a high-temperature consolidation cycle.
**FIG. 10A** is a chart showing transverse tensile strengths for laminates, each produced by: (1) consolidating first batch unidirectional tapes using (a) the low-temperature consolidation cycle or (b) the high-temperature consolidation cycle; or (2) consolidating second batch unidirectional tapes using (a) the low-temperature consolidation cycle or (b) the high-temperature consolidation cycle.
**FIGs. 10B** and **10C** are charts showing flexural strengths and flexural moduli for the laminates of FIG. 10A.

### DETAILED DESCRIPTION

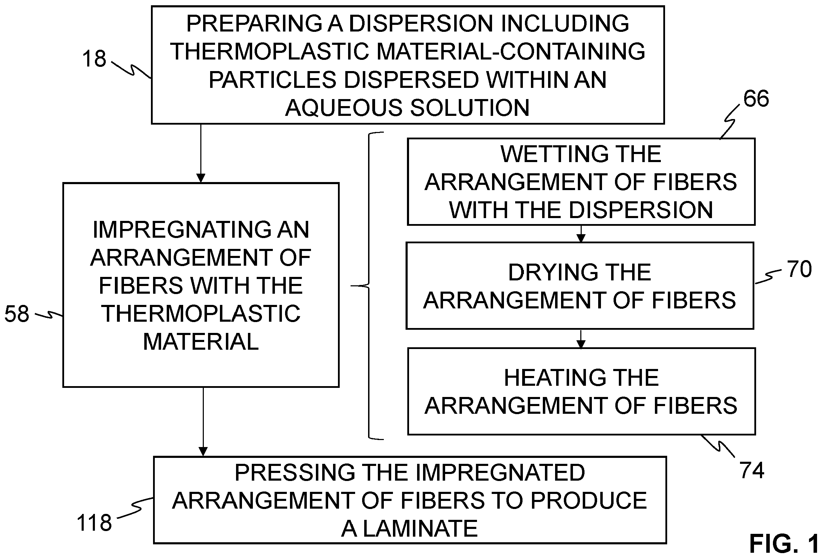

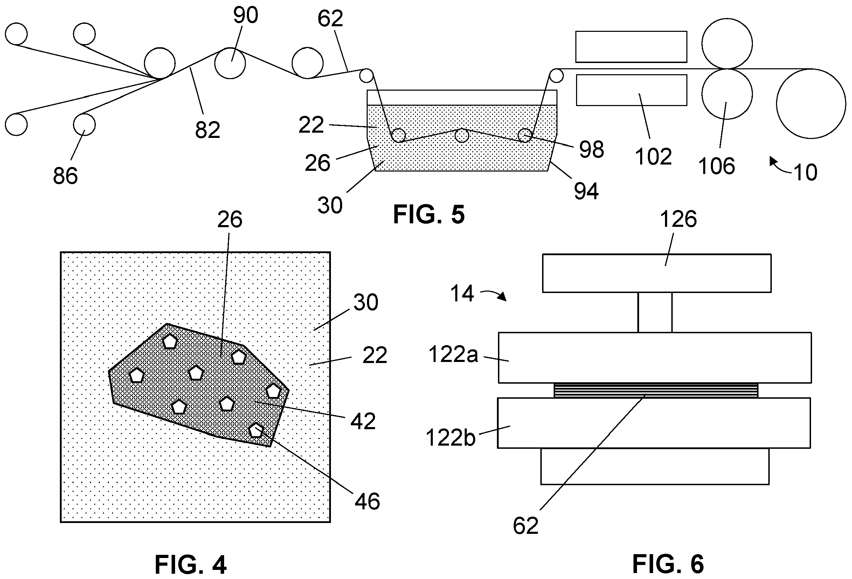

FIG. 1 is a flow chart showing some of the present methods for producing laminates, and FIGs. 5 and 6 depict a system 10 and a press 14, respectively, that can be used to perform at least some of those methods. Throughout this disclosure, system 10 and press 14 are referenced to illustrate, but do not limit, the methods of FIG. 1.

Some methods include a step 18 of preparing a dispersion (e.g., 22) including thermoplastic material-containing particles (e.g., 26) dispersed within an aqueous solution (e.g., 30). Dispersions (e.g., 22) are characterizable as such because their particles (e.g., 26) are solid and do not dissolve in their aqueous solutions (e.g., 30). Some dispersions (e.g., 22), due, at least in part, to their particle size distributions (e.g., one in which a majority of the mass and/or the volume of the particles is accounted for by ones of the particles having a diameter that is greater than 30 µm), can be characterized as course dispersions and/or suspensions because, if the dispersions are left undisturbed, their particles will eventually settle.

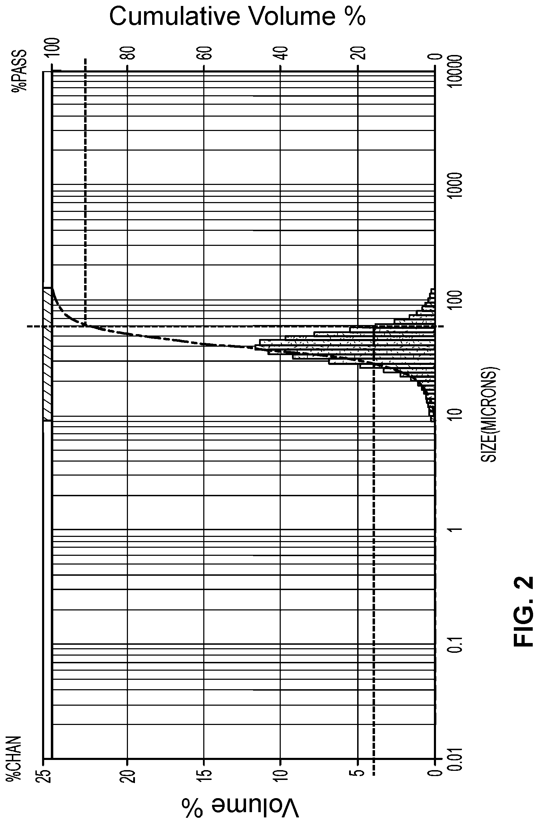

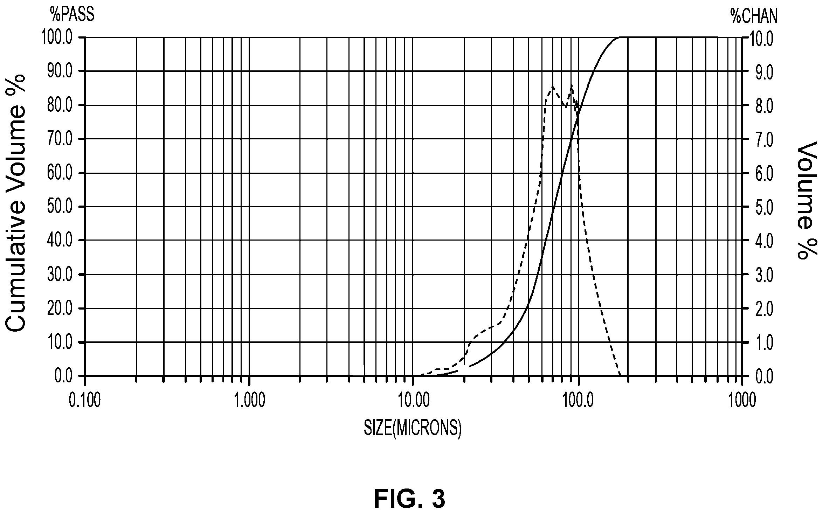

Particles (e.g., 26) of a dispersion (e.g., 22) can be sized to permit the particles to sufficiently reach interstices between fibers of an arrangement of fibers (e.g., 62) when the arrangement is wet with the dispersion, thereby enhancing impregnation of the arrangement using the dispersion. For example, FIG. 2 depicts an illustrative particle size distribution for such particles. In FIG. 2 (and FIG. 3, discussed below), the "SIZE" of a particle refers to its equivalent diameter-referred to herein as its diameter-if the particle is modelled as a sphere. A sphere that models a particle can be, for example, a sphere that would have or produce a value measured for the particle, such as the particle's mass and/or volume, light scattered by the particle, or the like. To be clear, particles of the present dispersions can, but need not, be spherical; in some dispersions, the particles are not spherical.

FIG. 2's (and FIG. 3's) particle size distribution is volume-based. For a given particle size, the y-axis on the left side (right side, in FIG. 3)of the graph indicates the percentage of the collective volume of the particles due to particles of that size, and the y-axis on the right side (left side, in FIG. 3) of the graph indicates the percentage of the collective volume of the particles due to particles of that size and smaller as well as the percentage of the collective volume of the particles that are larger than that size. To illustrate use of the graph (see the dashed lines depicted thereon): (1) particles having a diameter of 60 µm account for approximately 3.7% of the collective volume of the particles; (2) particles having a diameter of 60 µm or smaller account for approximately 89.8% of the collective volume of the particles; and (3) particles having a diameter that is larger than 60 µm account for approximately 10.2% of the collective volume of the particles. In some dispersions, the particles can have a particle size distribution that is otherwise the same as FIG. 2's (or FIG. 3's) but is mass-based. Such a particle size distribution would appear as shown in FIG. 2 (or in FIG. 3) and would be usable as described in this paragraph, except that "mass" would be substituted for "volume" in each instance.

To illustrate, ones of the particles: (1) having a diameter that is less than or equal to 50 µm can account for at least 30, 35, 40, 45, 50, 55, 60, 65, or 70% (e.g., at least 50%) of the mass and/or the volume of the particles; (2) having a diameter that is less than or equal to 40 µm can account for at least 15, 30, 35, 40, 45, 50% (e.g., at least 20%) of the mass and/or the volume of the particles; (3) having a diameter that is less than or equal to 30 µm can account for at least 5, 10, 15, or 20% (e.g., at least 10%) of the mass and/or the volume of the particles. To further illustrate, the particles can have a particle size distribution including: (1) a mass- and/or volume-based D50 that is less than or equal to 45 µm; and/or (2) a mass- and/or volume-based D10 that is less than or equal to 30 µm.

While smaller particles may be more capable of reaching interstices between fibers of an arrangement of fibers (e.g., 62) than are larger particles of the same collective mass, such smaller particles may negatively impact dispersion stability more so than such larger particles. This is due, in part, to such smaller particles having a larger collective surface area and thus an increased likelihood of reacting with one another and/or other ingredients, components, and/or compounds in the dispersion than do such larger particles. The use of such smaller particles may therefore necessitate the use of more dispersant, surfactant, and/or the like in the dispersion than would such larger particles (e.g., increasing the cost and complexity of the dispersion), and, if the particles are too small, they may negatively impact dispersion stability to the point that impregnation of the arrangement using the dispersion is hindered. In addition, producing such smaller particles may be more expensive and/or complicated than producing such larger particles.

Some of the present dispersions (e.g., 22) have particles (e.g., 26) with a particle size distribution that strikes a balance between the ability of the particles to reach interstices between fibers of an arrangement of fibers (e.g., 62) and dispersion stability, cost, and/or complexity. To illustrate-and staying with FIG. 2: (1) ones of the particles having a diameter that is greater than or equal to 50 µm can account for at least 10.0, 12.5, 15.0, 17.5, 20.0, 22.5, or 25.0% (e.g., at least 10%, at least 15%, and/or the like) of the mass and/or the volume of the particles; (2) ones of the particles having a diameter that is greater than or equal to 55 µm can account for at least 2.5, 5.0, 7.5, or 10% (e.g., at least 5%, at least 10%, and/or the like) of the mass and/or the volume of the particles; and/or (3) ones of the particles having a diameter that is greater than or equal to 60 µm can account for at least 2.5, 5.0, 7.5, or 10.0% (e.g., at least 5%) of the mass and/or the volume of the particles. To further illustrate, the particles can have: (1) a mass- and/or volume-based D10 that is between 20 µm and 30 µm (e.g., approximately 22 µm); (2) a mass- and/or volume-based D50 that is between 30 µm and 45 µm (e.g., approximately 40 µm); and/or (3) a mass- and/or volume-based D90 that is between 50 µm and 70 µm (e.g., approximately 55 µm, approximately 60 µm, and/or the like).

Nevertheless, the present dispersions can include particles having any suitable particle size distribution. Turning to FIG. 3, to illustrate, in some dispersions: (1) ones of the particles having a diameter that is less than or equal to 80 µm can account for at least 30, 35, 40, 45, 50, 55, or 60% (e.g., at least 50%) of the mass and/or the volume of the particles; and/or (2) ones of the particles having a diameter that is greater than or equal to 90 µm can account for at least 5, 10, 15, 20, or 25% (e.g., at least 20%) of the mass and/or the volume of the particles. To further illustrate, in some dispersions, the particle size distribution of the particles can have: (1) a mass- and/or volume-based D10 that is between 20 µm and 50 µm (e.g., between 30 µm and 40 µm, approximately 32 µm, and/or the like); (2) a mass- and/or volume-based D50 that is between 55 µm and 85 µm (e.g., between 65 µm and 75 µm, approximately 70 µm, and/or the like); and/or (3) a mass- and/or volume-based D90 that is between 90 µm and 120 µm (e.g., between 100 µm and 110 µm, approximately 105 µm, and/or the like).

The thermoplastic material of particles (e.g., 26) of the present dispersions (e.g., 22) can include any suitable thermoplastic material, such as, for example, polycarbonate, polyethylene terephthalate, polybutylene terephthalate, poly(1,4-cyclohexylidene cyclohexane-1,4-dicarboxylate), glycol-modified polycyclohexyl terephthalate, poly(phenylene oxide), polypropylene, polyethylene, polyvinyl chloride, polystyrene, polymethyl methacrylate, polyethyleneimine or polyetherimide or a derivative thereof, a thermoplastic elastomer, a terephthalic acid elastomer, poly(cyclohexanedimethylene terephthalate), polyethylene naphthalate, a polyamide, polysulfone sulfonate, polyether ether ketone, polyether ketone ketone, acrylonitrile butyldiene styrene, polyphenylene sulfide, a copolymer thereof, or a blend thereof. In some dispersions, the thermoplastic material of the particles (e.g., 26) comprises polycarbonate.

In some dispersions (e.g., 22), each of at least some of (e.g., at least 10, 25, 50, or 75% of, up to and including all of) the particles (e.g., 26) includes one or more additives dispersed throughout the thermoplastic material. For example, in such a particle, at least one of the one or more additives and the thermoplastic material can be present as a mixture. To illustrate one such mixture, FIG. 4 depicts a particle 26 including a thermoplastic material 42 (e.g., a continuous phase) and an additive 46 in the form of sub-particles (e.g., a discontinuous phase) that are dispersed throughout the thermoplastic material. More particularly, the sub-particles of additive 46 can be substantially surrounded by thermoplastic material 42, meaning at least 60, 70, 80, or 90% of the collective surface area of the sub-particles is covered by the thermoplastic material. At least some of the sub-particles can be completely surrounded by the thermoplastic material (e.g., 100% of the surface area of those sub-particles is covered by the thermoplastic material). To illustrate another such mixture, some particles can each include one or more additives that are co-continuous with the thermoplastic material (e.g., the one or more additives and the thermoplastic material each being a continuous phase). For further example, in some particles, one or more additives dispersed throughout the thermoplastic material can be chemically bonded (e.g., via ionic bonds, covalent bonds, van der Waals forces, and/or the like) to the thermoplastic material.

Including one or more additives in a dispersion (e.g., 22) by having those one or more additives dispersed throughout thermoplastic material-containing particles (e.g., 26) of the dispersion can: (1) reduce the risk of the one or more additives-e.g., being shielded by the thermoplastic material of the particles-reacting with one another and/or other ingredients, components, and/or compounds in the dispersion; (2) allow for greater amounts of the one or more additives to be included in the dispersion (e.g., via (1), via reducing the risk of the one or more additives aggregating, and/or the like); (3) promote uniform introduction of the one or more additives into an arrangement of fibers (e.g., 62) when the arrangement is wet by the dispersion (e.g., such uniformity being comparable to the uniformity at which the particles are introduced into the arrangement); and/or (4) simplify the dispersion at least by not requiring the one or more additives to be added to the dispersion independently of the particles. A further advantage of particles (e.g., 26) including one or more additives dispersed throughout the thermoplastic material is that certain additives, such as flame retardants, heat stabilizers, and/or the like, may protect the thermoplastic material (e.g., from heat) during production of the particles. With that said, in some dispersions, one or more additives can be included independently of the particles.

Such an additive can comprise, for example, a flame retardant, a coupling agent, an antioxidant, a heat stabilizer, a flow modifier, a UV stabilizer, a UV absorber, an impact modifier, a cross-linking agent, a filler, fibers, and/or metallic particles. In some dispersions (e.g., 22), such an additive is a flame retardant.

Suitable flame retardants include, for example, a non-halogen-based flame retardant, a phosphate structure, resorcinol bis(diphenyl phosphate), a sulfonated salt, halogen, phosphorous, talc, silica, a hydrated oxide, a brominated polymer, a chlorinated polymer, a phosphorated polymer, a nanoclay, an organoclay, a polyphosphonate, a poly[phosphonate-co-carbonate], a polytetrafluoroethylene and styrene-acrylonitrile copolymer, a polytetrafluoroethylene and methyl methacrylate copolymer, a polysiloxane copolymer, and/or the like (e.g., a non-halogen-based flame retardant).

Suitable coupling agents include, for example, maleated coupling agents (e.g., maleic anhydride-grafted polypropylene, maleic anhydride-grafted ethylene, and/or the like), silane coupling agents, titanates, and/or the like. Suitable antioxidants include, for example, hindered phenols, secondary aromatic amines, trivalent phosphorous compounds, thioethers, organic sulfides, and/or the like. Suitable heat stabilizers include, for example, organophosphites, phenolic antioxidants, and/or the like. Suitable flow modifiers include, for example, peroxide masterbatches. Suitable UV stabilizers include, for example, hindered amine light stabilizers, hydroxybenzophenones, hydroxyphenyl benzotriazoles, cyanoacrylates, oxanilides, hydroxyphenyl triazines, and/or the like. Suitable UV absorbers include, for example, 4-substituted-2-hydroxybenzophenones and their derivatives, aryl salicylates, monoesters of diphenols, such as resorcinol monobenzoate, 2-(2-hydroxyaryl)-benzotriazoles and their derivatives, 2-(2-hydroxyaryl)-1,3,5-triazines and their derivatives, and/or the like.

Suitable impact modifiers include, for example, elastomers/softblocks dissolved in matrix-forming monomer(s), such as, for example, bulk HIPS, bulk ABS, reactor modified PP, LOMOD, LEXAN EXL, and/or the like, thermoplastic elastomers dispersed in matrix material by compounding, such as, for example, di-, tri-, and multiblock copolymers, (functionalized) olefin (co)polymers, and/or the like, pre-defined core-shell (substrate-graft) particles distributed in matrix material by compounding, such as, for example, MBS, ABS-HRG, AA, ASA-XTW, SWIM, and/or the like. Suitable cross-linking agents include, for example, divinylbenzene, benzoyl peroxide, alkylenediol di(meth)acrylates, such as, for example, glycol bisacrylate and/or the like, alkylenetriol tri(meth)acrylates, polyester di(meth)acrylates, bisacrylamides, triallyl cyanurate, triallyl isocyanurate, allyl (meth)acrylate, diallyl maleate, diallyl fumarate, diallyl adipate, triallyl esters of citric acid, triallyl esters of phosphoric acid, and/or the like.

Suitable fillers include, for example, talc, calcium carbonate, silica, other mineral-based fillers, conductive fillers (e.g., aluminum powders, carbon fiber, graphite, and/or the like), and/or the like. Suitable fibers include, for example, carbon fibers, glass fibers, aramid fibers, and/or the like.

Thermoplastic material-containing particles (e.g., 26) of the present dispersions (e.g., 22) can be produced in any suitable fashion, such as, for example, by grinding (e.g., dry- or wet-grinding), milling (e.g., jet milling), and/or the like the thermoplastic material (which, as described above, may include one or more additives dispersed throughout it). Some particles (e.g., 26), due to their particle size distributions (including those discussed above with respect to FIGs. 2 and 3) being predominantly on the order of 10's of microns, can be produced by dry grinding the thermoplastic material, which may be less complicated than other methods, such as wet grinding.

Aqueous solutions (e.g., 30) of the present dispersions (e.g., 22) can comprise at least 50, 60, 70, 80, or 90% by weight of water and can include solubilized ingredients, components, and/or compounds.

Returning to FIG. 1, some methods include a step 58 of impregnating an arrangement of fibers (e.g., 62) using a dispersion (e.g., any of the dispersions described herein) that includes thermoplastic material-containing particles (e.g., 26) dispersed in an aqueous solution (e.g., 30). Step 58 can include: a sub-step 66 of wetting the arrangement with the dispersion to introduce the particles into the arrangement; a sub-step 70 of drying the arrangement to remove at least some of (e.g., most of, preferably all of) the solution from the arrangement; and a sub-step 74 of heating the arrangement to melt the particles. Each of these sub-steps is described below.

Using FIG. 5's system 10 to illustrate, the arrangement can comprise one or more fiber strands 82, sometimes referred to as rovings or tows (e.g., 1, 2, 3, 4, 5, 6, 7, 8, 9, 10, or more strands). As is typical, strands 82 can be provided on spools 86. Each of strands 82 can comprise any suitable number of fibers; for example, a strand can comprise between 100 and 80,000 fibers, a strand can be a 1K, 3K, 6K, 12K, 24K, 50K, or larger strand, and/or the like. Prior to being wet with the dispersion, strands 82 can be spread by, for example, passing the strands over and/or under one or more spreading elements 90, such as one or more rods, pins, rollers, plates, and/or the like. That being said, in some methods, an arrangement of fibers can be woven (e.g., in which the fibers are arranged in a plane, twill, satin, basket, leno, mock leno, or the like weave), non-woven (e.g., in which the fibers are multidirectional and connected to one another via entanglement and/or thermal and/or chemical bonds, rather than in a weave or knit), or the like, any of which may or may not be provided on a spool. Fibers of an arrangement-whether including strands (e.g., 82), being woven, or being non-woven-can comprise any suitable fibers, such as, for example, carbon fibers, glass fibers, aramid fibers, ceramic fibers, basalt fibers, cellulosic fibers, and/or the like (e.g., carbon fibers).

To wet the arrangement with the dispersion (sub-step 66), the arrangement can be immersed in the dispersion. To illustrate, the dispersion can be contained within a bath 94, and strands 82 can be directed through the bath using one or more guide elements 98. In other methods, the arrangement can be wet with the dispersion in any suitable fashion, including by spraying, pouring, brushing, curtain coating, and/or the like the dispersion onto the arrangement. After being wet with the dispersion, the arrangement can be dried (sub-step 70) by, for example, allowing the arrangement to air dry (e.g., in some instances, facilitated by one or more blowers), passing the arrangement by or through, or placing the arrangement by or in, a heat source (e.g., an infrared heat source, an oven, a heated die, and/or the like).

Now introduced into the arrangement, the particles can be melted (sub-step 74). As shown in FIG. 5, to accomplish this, the arrangement can be passed through a heated die 102. Drying the arrangement and melting the particles can be performed, at least in part, using the same structure(s) (e.g., heated die 102 can be used to perform both sub-step 70 and sub-step 74). Heated die 102 is provided by way of illustration; in other methods, another heat source-in addition to or in lieu of a heated die-can be used, such as, for example, an infrared heat source, an oven, and/or the like. In some methods, the arrangement can then be pressed, such as between calendaring rolls 106. Calendaring rolls 106-or other pressing elements used to press the arrangement-can be at a higher temperature than the arrangement (e.g., to facilitate flow of the thermoplastic material (and one or more additives, if present) through the arrangement) or at a lower temperature than the arrangement (e.g., to facilitate cooling of the arrangement). Calendaring rolls 106 are illustrative pressing elements; other suitable pressing elements include platens of a static press, belts of a double-belt press, and/or the like.

Some methods include a step 118 of pressing (consolidating) the impregnated arrangement (the arrangement after step 58), whether alone or in a stack including other such arrangement(s), between pressing elements to produce a laminate. FIG. 6 depicts exemplary such pressing elements: platens 122a and 122b of static press 14, which are movable to press arrangement(s) disposed between them via actuator 126. Nevertheless, other pressing elements, including any of those described above, can be used.

Arrangements (e.g., 62) impregnated using dispersions (e.g., 22) that have smaller thermoplastic material-containing particles (e.g., 26)-such as those having any particle size distribution discussed above with respect to FIG. 2-may be consolidated using lower temperatures and, in some instances, lower pressures and/or dwell times, than those impregnated using dispersions that have larger such particles. This is due, in part, to the former having a more uniform distribution of thermoplastic material before consolidation, and thus needing less temperature (e.g., and pressure and/or dwell time) to achieve a desired level of such uniformity during consolidation, than the latter. In at least this way, some of the present dispersions (e.g., 22) can be used to reduce the time, cost, and/or energy required to produce laminates, which is particularly advantageous when mass producing such laminates.

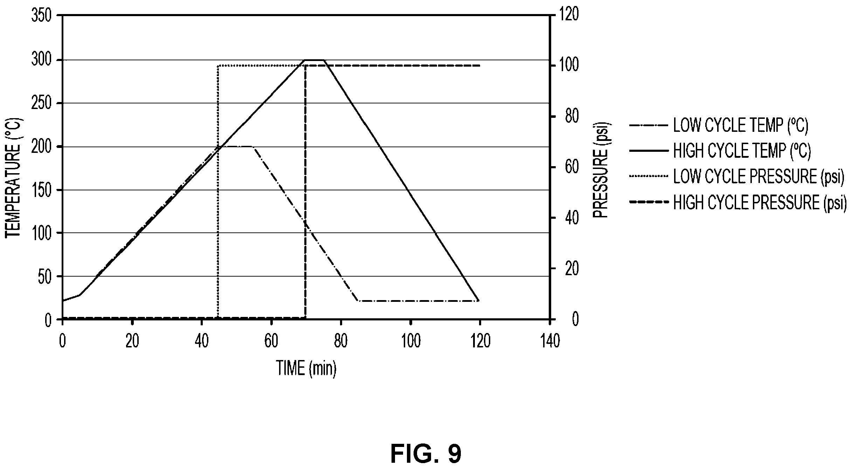

To illustrate, in some methods, a maximum temperature of the pressing elements-meaning the highest temperature reached by at least one of the pressing elements-during pressing of the arrangement(s) is less than or approximately equal to any one of, or between any two of: 180, 190, 200, 210, 220, 230, 240, 250, 260, or 270 °C (e.g., does not exceed 200 °C, 225 °C, or 250 °C). Pressing of the arrangement(s) begins when the pressing elements apply pressure to the arrangement(s) and ends when the pressing elements no longer apply pressure to the arrangement(s). A lower maximum pressing elements temperature may significantly reduce the time required to produce a laminate (FIG. 9, showing that it takes less time for pressing elements to reach, and cool down from, a lower maximum temperature).

To further illustrate, in some methods, the pressing elements are at or within 5% of the maximum temperature during pressing of the arrangements(s), which is met so long as at least one of the pressing elements is, for a period of time-referred to herein as "dwell time"-that is less than or approximately equal to any one of, or between any two of: 20.0, 17.5, 15.0, 12.5, 10.0, or 5.0 minutes (min) (e.g., less than approximately 15 min). To yet further illustrate, in some methods, pressure applied to the arrangement(s) by the pressing elements does not exceed 80, 90, 100, 110, 120, 130, or 140 pounds per square inch (psi) (e.g., does not exceed 100 or 120 psi).

Some of the present dispersions for impregnating an arrangement of fibers with polycarbonate comprise an aqueous solution and particles dispersed within the solution, each of the particles comprising polycarbonate, wherein ones of the particles having a diameter that is less than or equal to 50 µm account for at least 50% of the mass and/or the volume of the particles, and ones of the particles having a diameter that is greater than or equal to 55 µm account for at least 5% of the mass and/or the volume of the particles. In some dispersions, ones of the particles having a diameter that is less than or equal to 30 µm account for at least 10% of the mass and/or the volume of the particles.

In some dispersions, each of at least some of the particles comprises one or more additives dispersed throughout the polycarbonate, and the one or more additives comprises a flame retardant, a coupling agent, an antioxidant, a heat stabilizer, a flow modifier, a UV stabilizer, a UV absorber, an impact modifier, a cross-linking agent, a filler, fibers, and/or metallic particles. In some dispersions, the one or more additives comprises a flame retardant.

Some of the present methods for producing a laminate comprise wetting an arrangement of fibers with a dispersion including an aqueous solution and particles dispersed within the solution, wherein each of the particles comprises a thermoplastic material and ones of the particles having a diameter that is less than or equal to 50 µm account for at least 50% of the mass and/or the volume of the particles, drying the arrangement of fibers to remove at least some of the solution from the arrangement of fibers, heating the arrangement of fibers to melt ones of the particles within the arrangement of fibers, and pressing the arrangement of fibers between pressing elements to produce a laminate, wherein, during pressing, a maximum temperature of the pressing elements does not exceed 250 °C. In some methods, during pressing, the pressing elements are at or within 5% of the maximum temperature for less than approximately 15 min. In some methods, during pressing, pressure applied by the pressing elements to the arrangement of fibers does not exceed 120 psi.

In some methods, each of at least some of the particles comprises one or more additives dispersed throughout the thermoplastic material, and the one or more additives comprises a flame retardant, a coupling agent, an antioxidant, a heat stabilizer, a flow modifier, a UV stabilizer, a UV absorber, an impact modifier, a cross-linking agent, a filler, fibers, and/or metallic particles.

Some of the present methods for impregnating an arrangement of fibers with a thermoplastic material comprise wetting an arrangement of fibers with a dispersion including an aqueous solution and particles dispersed within the solution, wherein each of the particles comprises a thermoplastic material, and each of at least some of the particles comprises one or more additives dispersed throughout the thermoplastic material, wherein the one or more additives comprises a flame retardant, a coupling agent, an antioxidant, a heat stabilizer, a flow modifier, a UV stabilizer, a UV absorber, an impact modifier, a cross-linking agent, a filler, fibers, and/or metallic particles, and ones of the particles having a diameter that is less than or equal to 50 µm account for at least 50% of the mass and/or the volume of the particles, drying the arrangement of fibers to remove at least some of the solution from the arrangement of fibers, and heating the arrangement of fibers to melt ones of the particles within the arrangement of fibers

In some methods, one of the particles having a diameter that is greater than or equal to 55 µm account for at least 5% of the mass and/or the volume of the particles. In some methods, ones of the particles having a diameter that is less than or equal to 30 µm account for at least 10% of the mass and/or the volume of the particles.

In some methods, the one or more additives comprises a flame retardant. In some methods, each of at least some of the particles comprises a mixture of the thermoplastic material and at least one of the one or more additives and, optionally, the additive is in the form of sub-particles and the sub-particles are substantially surrounded by the thermoplastic material.

In some methods, the thermoplastic material comprises polycarbonate. Some methods comprise dry-grinding the thermoplastic material to produce the particles.

### EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

### EXAMPLE 1

### Unidirectional Tapes Produced using Some of the Present Dispersions

A material including polycarbonate and a non-halogen-based flame retardant dispersed throughout the polycarbonate was ground to produce two sets of particles: a first set having the particle size distribution shown in FIG. 3 and a second set having the particle size distribution shown in FIG. 2. Due to the flame retardant, the material had a glass transition temperature of approximately 105 °C. For each set of particles, the particles were dispersed within an aqueous solution to produce a dispersion. Each of the dispersions was sufficiently stable.

First and second batches of unidirectional tapes were produced; for the first batch ("Batch 1 Tapes"), the dispersion including the first set of particles was used, and, for the second batch ("Batch 2 Tapes"), the dispersion including the second set of particles was used. To make each tape, carbon fiber tows were spread and passed through a bath containing the dispersion such that the particles were introduced into the tows. The tows were then dried, passed through a heated die to melt the particles, and pressed between calendaring rolls. Each of the tapes (whether Batch 1 or Batch 2) had a fiber volume fraction of approximately 60%.

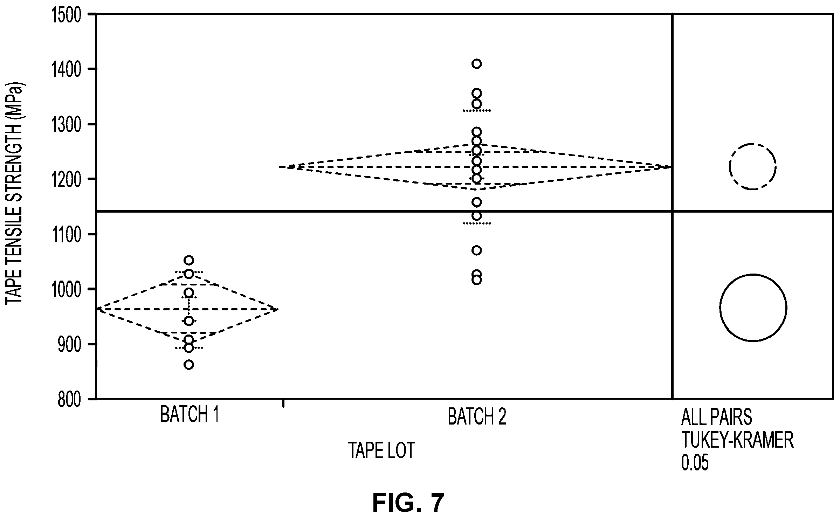

Longitudinal, or along the fiber direction, tensile testing of the tapes was performed according to ASTM D3039. From each of the tapes, a specimen was prepared having a width, perpendicular to the fiber direction of the tape, of 12.7 millimeters (mm) and a gage length, parallel to the fiber direction of the tape, of 139.7 mm. And, each of the specimens was tested using a constant crosshead speed of 1.27 mm/min. The specimens were gripped at their ends during testing using SURFALLOY-coated grip wedges. The results of these tests are included in TABLE 1 and charted in FIG. 7.

**TABLE 1: TENSILE TESTING OF UNIDIRECTIONAL TAPES PRODUCED USING SOME OF THE PRESENT DISPERSIONS**

| | **Tensile Strength (MPa)** | |
|---|---|---|
| | **Batch 1** | **Batch 2** |
| **Average (AVG)** | 963.1 | 1220.8 |
| **Standard Deviation (σ)** | 68.3 | 101.6 |
| **Coefficient of Variation (CV)** | 7% | 8% |

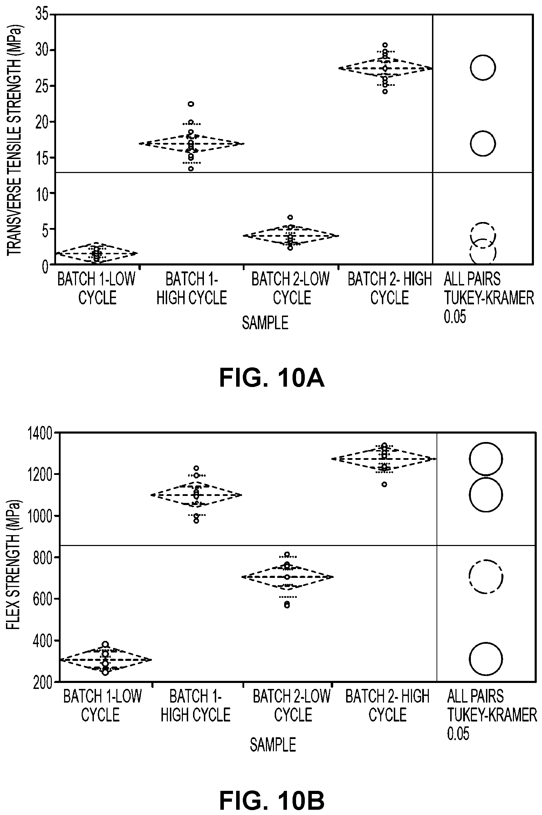

The Batch 2 Tapes had an average tensile strength that was over 20% larger than that of the Batch 1 Tapes. The comparison circles in FIG. 7, produced using the Tukey-Kramer method with an alpha of 0.5 (as were the comparison circles in FIGs. 10A-10C), indicate that the difference between the average tensile strengths of the Batch 1 Tapes and the Batch 2 Tapes is significant.

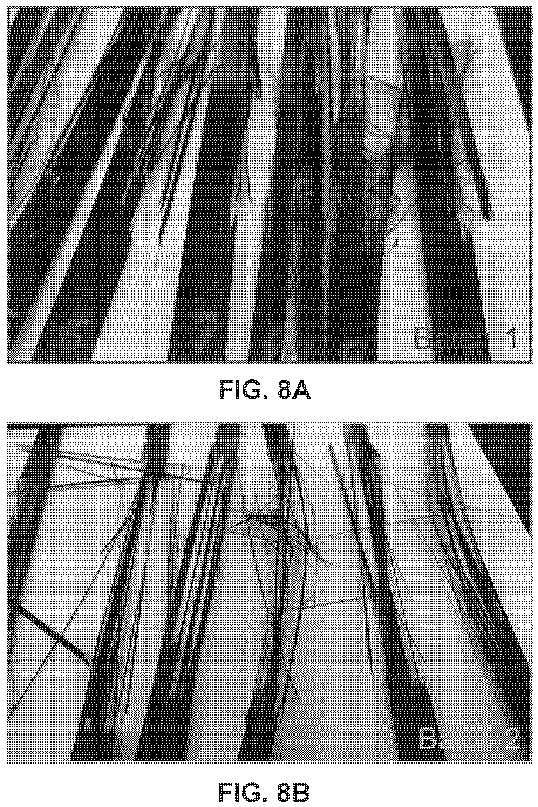

FIGs. 8A and 8B are photographs of Batch 1 Tapes and Batch 2 Tapes, respectively, after longitudinal tensile testing. The Batch 1 Tapes showed excessive hairlike behavior that is indicative of tape portions in which the fibers were not sufficiently impregnated with resin. In comparison, the Batch 2 Tapes showed relatively well-defined splits along the fiber direction, with significantly less hairlike behavior. And, evidenced by fiber breakage being more prevalent in the Batch 2 Tapes than in the Batch 1 Tapes, the fibers of the Batch 2 Tapes bore greater loads than those of the Batch 1 Tapes.

That the Batch 2 Tapes outperformed the Batch 1 Tapes may be due to the particles in the dispersion used to produce the Batch 2 Tapes (having a D50 particle size of approximately 40 µm) being smaller, on average, than the particles in the dispersion used to produce the Batch 1 Tapes (having a D50 particle size of approximately 70 µm). In particular, the smaller particles used for the Batch 2 Tapes may have better reached interstices between fibers of the fiber tows when compared to the larger particles used for the Batch 1 Tapes, ultimately resulting in tapes having improved resin-fiber interfaces and therefore higher tensile strengths.

### EXAMPLE 2

### Laminates Produced Using Some of the Present Dispersions

Laminates were each produced by consolidating: 16 layers of the Batch 1 Tapes ("Batch 1 Laminates") or 16 layers of the Batch 2 Tapes ("Batch 2 Laminates"). The laminates were unidirectional laminates, meaning the tapes of each were aligned with one another along their fiber directions, and each had a thickness of approximately 2 mm.

The laminates were each produced by pressing its tapes between pressing elements of a static press using either a low-temperature consolidation cycle ("Low Cycle") or a high-temperature consolidation cycle ("High Cycle"). The consolidation parameters for the Low Cycle and the High Cycle are included in TABLE 2 and are graphed in FIG. 9.

**TABLE 2: LOW CYCLE AND HIGH CYCLE CONSOLIDATON PARAMETERS**

| | **Maximum Temperature (°C)** | **Maximum Pressure (psi)** | **Dwell Time (min)** |
|---|---|---|---|
| **Low Cycle** | 200 | 100 | 10 |
| **High Cycle** | 300 | 100 | 5 |

For each of the Low Cycle and the High Cycle: the maximum temperature was that of the pressing elements while they applied pressure to the tapes; the maximum pressure was that applied by the pressing elements to the tapes; and the dwell time was the period of time at which the pressing elements were at the maximum temperature while they applied pressure to the tapes. As shown in FIG. 9, in both the Low Cycle and the High Cycle, pressure was applied to the tapes by the pressing elements once the pressing elements were at the maximum temperature, and that pressure was maintained while the pressing elements cooled.

Transverse, or perpendicular to the fiber direction, tensile testing of the laminates was performed according to ASTM D3039. Accordingly, for each of the laminates, a specimen was prepared having a width, parallel to the fiber direction of the laminate, of 12.7 mm and a gage length, perpendicular to the fiber direction, of 139.7 mm. Each of the specimens were tested using a constant crosshead speed of 1.27 mm/min.

Also performed were four-point bending tests of the laminates pursuant to ASTM D7264. For these tests, a specimen from each laminate was prepared that had a span-to-thickness ratio of 32:1 in order to encourage pure bending of the specimen and minimize shear contributions along the neutral axis of the specimen. A support span of 64 mm was used in each instance. The results of the transverse tensile and four-point bending tests are included in TABLE 3 and charted in FIGs. 10A-10C.

**TABLE 3: TENSILE AND FOUR-POINT BENDING TESTING OF LAMINATES PRODUCED USING SOME OF THE PRESENT DISPERSIONS**

| | | **Transverse Tensile Strength (MPa)** | | **Flexural Strength (MPa)** | | **Flexural Modulus (GPa)** | |
|---|---|---|---|---|---|---|---|
| | | **Batch 1** | **Batch 2** | **Batch 1** | **Batch 2** | **Batch 1** | **Batch 2** |
| **Low Cycle** | **AVG** | 1.7 | 4.1 | 310.5 | 707.0 | 80.0 | 117.1 |
| | **σ** | 0.6 | 1.2 | 43.7 | 98.7 | 5.8 | 6.1 |
| | **CV** | 35% | 30% | 14% | 14% | 7% | 5% |
| **High Cycle** | **AVG** | 17.0 | 27.5 | 1100.4 | 1273.2 | 122.3 | 125.1 |
| | **σ** | 2.7 | 2.3 | 93.1 | 64.2 | 8.4 | 4.1 |
| | **CV** | 16% | 8% | 8% | 5% | 7% | 3% |

For either the Batch 1 Laminates or the Batch 2 Laminates, those pressed using the High Cycle had a significantly higher average transverse tensile strength than those pressed using the Low Cycle. This indicates that, all else being equal, laminates produced using the High Cycle had more complete consolidation than laminates produced using the Low Cycle. Further, among the laminates pressed using the High Cycle, those of the Batch 2 Laminates had a higher average transverse tensile strength than did those of the Batch 1 Laminates, and the difference between these average tensile strengths was significant, as evidenced by the comparison circles in FIG. 10A. As was shown, the transverse tensile strength of a laminate is driven not only by the parameters used to consolidate the tapes of the laminate, but also by the degree of impregnation of those tapes pre-consolidation: the High Cycle Batch 2 Laminates, produced using more impregnated Batch 2 Tapes, outperformed the High Cycle Batch 1 Laminates, produced using less impregnated Batch 1 Tapes.

With respect to flexural strength (charted in FIG. 10B), the Low Cycle and the High Cycle Batch 2 Laminates outperformed the Low Cycle and the High Cycle, respectively, Batch 1 Laminates. During the four-point bending tests, the specimen for each laminate failed at its top surface in compressive buckling. Thus, the higher average flexural strengths of the Batch 2 Laminates when compared to the Batch 1 Laminates indicate that the Batch 2 Laminates better resisted out-of-plane kinking of their outermost tapes. Also shown is that, for either the Batch 1 Laminates or the Batch 2 Laminates, those pressed using the High Cycle had higher average flexural strengths than those pressed using the Low Cycle. Notably, the difference between average flexural strengths for the Low Cycle laminates and the High Cycle laminates was greater for the Batch 1 Laminates than it was for the Batch 2 Laminates, which indicates that the Batch 2 Laminates, due to being produced using more impregnated tapes, were less sensitive to the changes in consolidation parameters.

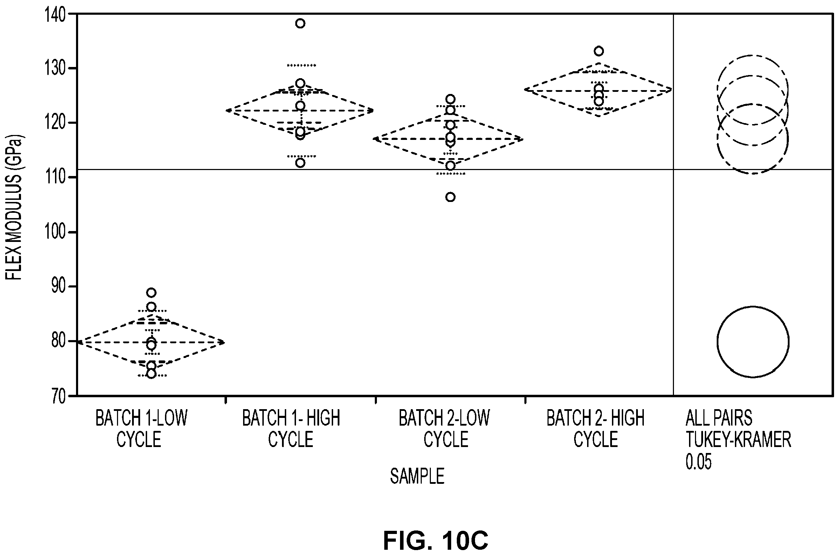

Turning to flexural modulus (charted in FIG. 10C), the High Cycle Batch 1 Laminates had a significantly higher average flexural modulus than did the Low Cycle Batch 1 Laminates; in comparison, that difference between the Low Cycle and the High Cycle Batch 2 Laminates was small. This is another indication that the Batch 2 Laminates were less sensitive to the changes in consolidation parameters than were the Batch 1 Laminates. Of note is that the Low Cycle Batch 2 Laminates performed comparably to both the High Cycle Batch 1 Laminates and the High Cycle Batch 2 Laminates. While the flexural modulus of a laminate is primarily a fiber-driven property, to achieve a desirable flexural modulus, some degree of consolidation of the laminate is required to ensure that shear within the resin of the laminate is properly transferred to the fibers of the laminate.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A dispersion for impregnating an arrangement of fibers with polycarbonate, the dispersion comprising:
an aqueous solution; and
particles dispersed within the solution, each of the particles comprising polycarbonate, wherein:
ones of the particles having a diameter that is less than or equal to 50 micrometers (µm) account for at least 50% of the mass and/or the volume of the particles; and
ones of the particles having a diameter that is greater than or equal to 55 µm account for at least 5% of the mass and/or the volume of the particles.

2. The dispersion of claim 1, wherein:
each of at least some of the particles comprises one or more additives dispersed throughout the polycarbonate; and
the one or more additives comprises a flame retardant, a coupling agent, an antioxidant, a heat stabilizer, a flow modifier, a UV stabilizer, a UV absorber, an impact modifier, a cross-linking agent, a filler, fibers, and/or metallic particles.

3. The dispersion of claim 2, wherein the one or more additives comprises a flame retardant.

4. The dispersion of any of claims 1-3, wherein ones of the particles having a diameter that is less than or equal to 30 µm account for at least 10% of the mass and/or the volume of the particles.

5. A method for producing a laminate, the method comprising:
wetting an arrangement of fibers with a dispersion including:
an aqueous solution; and
particles dispersed within the solution, wherein:
each of the particles comprises a thermoplastic material; and
ones of the particles having a diameter that is less than or equal to 50 µm account for at least 50% of the mass and/or the volume of the particles;
drying the arrangement of fibers to remove at least some of the solution from the arrangement of fibers;
heating the arrangement of fibers to melt ones of the particles within the arrangement of fibers; and
pressing the arrangement of fibers between pressing elements to produce a laminate, wherein, during pressing, a maximum temperature of the pressing elements does not exceed 250 °C.

6. The method of claim 5, wherein, during pressing, the pressing elements are at or within 5% of the maximum temperature for less than approximately 15 minutes (min).

7. The method of claim 5 or 6, wherein, during pressing, pressure applied by the pressing elements to the arrangement of fibers does not exceed 120 pounds per square inch (psi).

8. The method of any of claims 5-7, wherein:
each of at least some of the particles comprises one or more additives dispersed throughout the thermoplastic material; and
the one or more additives comprises a flame retardant, a coupling agent, an antioxidant, a heat stabilizer, a flow modifier, a UV stabilizer, a UV absorber, an impact modifier, a cross-linking agent, a filler, fibers, and/or metallic particles.

9. A method for impregnating an arrangement of fibers with a thermoplastic material, the method comprising:
wetting an arrangement of fibers with a dispersion including:
an aqueous solution; and
particles dispersed within the solution, wherein:
each of the particles comprises a thermoplastic material;
each of at least some of the particles comprises:
one or more additives dispersed throughout the thermoplastic material;
wherein the one or more additives comprises a flame retardant, a coupling agent, an antioxidant, a heat stabilizer, a flow modifier, a UV stabilizer, a UV absorber, an impact modifier, a cross-linking agent, a filler, fibers, and/or metallic particles; and
ones of the particles having a diameter that is less than or equal to 50 µm account for at least 50% of the mass and/or the volume of the particles; and
drying the arrangement of fibers to remove at least some of the solution from the arrangement of fibers; and
heating the arrangement of fibers to melt ones of the particles within the arrangement of fibers.

10. The method of claim 8 or 9, wherein the one or more additives comprises a flame retardant.

11. The method of any of claims 8-10, wherein each of at least some of the particles comprises a mixture of the thermoplastic material and at least one of the one or more additives and, optionally:
the additive is in the form of sub-particles; and
the sub-particles are substantially surrounded by the thermoplastic material.

12. The method of any of claims 8-11, wherein ones of the particles having a diameter that is greater than or equal to 55 µm account for at least 5% of the mass and/or the volume of the particles.

13. The method of any of claims 8-12, wherein ones of the particles having a diameter that is less than or equal to 30 µm account for at least 10% of the mass and/or the volume of the particles.

14. The method of any of claims 8-13, wherein the thermoplastic material comprises polycarbonate.

15. The method of any of claims 8-14, comprising dry-grinding the thermoplastic material to produce the particles.
